# FASCICULE DE BREVET EUROPEEN

(11) **EP 1 842 831 B1**
(45) Date de publication et mention de la délivrance du brevet: **18.11.2009**
(21) Numéro de dépôt: 07290391.7
(22) Date de dépôt: 30.03.2007
(51) Int. Cl.: C02F 3/12

(54) **Procédé et station de traitement, en particulier d'épuration, d'effluents, notamment urbains, industriels ou animaliers et installation sanitaire apte à être associée à une telle station de traitement**
Aufbereitungsverfahren und Vorrichtung, insbesondere zur Rückgewinnung von städtischen, industriellen oder tierischen Abwässern und Sanitäranlage, die zur Verbindung mit einer solchen Aufbereitungsvorrichtung geeignet ist
Method and station for treating effluent, in particular urban, industrial or animal effluent, and sanitary installation capable of being associated with such a treatment station.

(30) Priorité: 05.04.2006 FR 0602953
(43) Date de publication de la demande: 10.10.2007
(73) Titulaire: L'Oceane des Plastics, 56190 Muzillac (FR)
(72) Inventeur: Budes, Patrick, 56000 Vannes (FR)
(74) Mandataire: Laget, Jean-Loup

(56) Documents cités:
- JP-A- 2003 260 480
- US-A1- 2002 166 819

## Description

La présente invention concerne un procédé et une station de traitement, en particulier d'épuration, d'effluents, notamment urbains, industriels ou animaliers ainsi qu'une installation sanitaire, telle que douche, toilette, apte à être associée à une telle station de traitement.

Le traitement des effluents d'origine diverse, en particulier le traitement des eaux noires et grises, telles que celles issues des toilettes, pose problème aujourd'hui, notamment dans le cas de toilette embarquée sur un bateau, dans un camping car ou autre.

Jusqu'à présent, la plupart des traitements utilisés comportent un traitement chimique associé à un éventuel broyage des eaux noires récoltées dans une cuve et la vidange régulière de ladite cuve. C'est l'opération de vidange qui pose problème à l'utilisateur car il n'existe pas de lieu dédié au recueil de ces eaux traitées.

Des problèmes analogues de traitement se posent pour les jus issus du lisier, pour les effluents industriels ou autres.

Ces dernières années est apparu sur le marché un nouveau procédé comprenant une étape de traitement biologique suivie d'une étape d'électrofloculation de l'effluent en vue de la formation de composés coagulés dans ledit effluent, cette étape étant elle-même suivie d'une étape de filtration au cours de laquelle les particules séparées tendent à s'accumuler au fond de la station d'épuration avant d'être, de manière intermittente, réinjectées par pompage dans la partie de la station assurant l'étape de traitement biologique. Un tel procédé, mis en oeuvre dans une fosse septique, est décrit dans le brevet JP 2003 260 480. Du fait des caractéristiques de l'étape de filtration mise en oeuvre à l'aide d'un filtre type filtre à charbon traditionnel, il est nécessaire de procéder régulièrement à un décolmatage du filtre par injection d'air à contre-courant. Les particules séparées du filtre par flux d'air lors de l'opération de décomaltage s'accumulent alors au fond de la cuve de la station d'épuration. Cet amas de particules est pompé pour être soumis à un nouveau traitement biologique. Du fait des caractéristiques de la filtration, il est donc nécessaire d'interrompre régulièrement le processus de traitement de l'effluent pour procéder à un décolmatage du filtre et à l'évacuation des particules accumulées. De ce fait, le traitement du concentrat s'opère de manière discontinue par à-coups indépendamment du traitement du filtrat réduisant l'efficacité du traitement par comparaison à un traitement où filtrat et concentrat sont traités en parallèle. Il en résulte la nécessité de procéder régulièrement à une évacuation hors de la station du concentrat qui tend à s'accumuler en raison de ce traitement discontinu. Ce document constitue l'état de la technique le plus pertinent.

Le brevet US 2002/0166819 décrit quant à lui une station d'épuration d'effluents issus d'une usine de production d'animaux. Cette station met en oeuvre un procédé d'épuration comprenant une étape de séparation par filtration de la phase liquide d'un effluent, suivie d'une introduction dans un bio-réacteur de la phase liquide, avant formation de composés coagulés dans la phase liquide dudit effluent par électrocoagulation. A l'intérieur de la cuve d'électrocofloculation, les composés coagulés peuvent être piégés pour un recyclage en composés utiles et valorisables tels que des composés fertilisants ou des amendements tandis que la phase épurée est recyclée au sein de l'usine. En conséquence, dans une telle installation, le concentrat est éliminé régulièrement de la station d'épuration par piégeage et forme un amas de particules aptes à être recyclés sous forme de produits valorisables. Le concentrat n'est donc pas soumis à une récirculation au sein de la station mais est évacué de la station après piégeage. Il en résulte la nécessité d'une vidange fréquente de ladite station pour éliminer le concentrat.

Un but de la présente invention est donc de proposer un procédé et une station de traitement du type précité dont les conceptions permettent de limiter les opérations de vidange et le rejet de matières polluantes à l'extérieur de ladite station.

Un autre but de la présente invention est de proposer un procédé et une station de traitement dont les conceptions permettent à la fois un recyclage des matières solides et des liquides contenus dans ledit effluent.

Un autre but de la présente invention est de proposer un procédé et une station de traitement dont les conceptions permettent un fonctionnement en autonomie sans vidange sur une période de plusieurs mois et une maintenance simplifiée.

A cet effet, l'invention a pour objet un procédé de traitement, en particulier d'épuration, d'effluents, notamment urbains, industriels ou animaliers, du type comprenant au moins les étapes successives suivantes :
- une étape de traitement biologique, généralement bactérien, dudit effluent,
- une étape d'électro-floculation de l'effluent, en vue de la formation de composés coagulés dans ledit effluent,
- une étape de filtration de l'effluent pour séparer le concentrat du filtrat,
caractérisé en ce que, lors de l'étape de filtration, on soumet l'effluent à une filtration tangentielle, et en ce que, à l'issue de l'étape de filtration, par l'intermédiaire d'une même pompe, on soumet à nouveau le concentrat à un traitement biologique tandis qu'on évacue le filtrat épuré.

La réalisation d'un traitement biologique suivi d'une électro-floculation, elle-même suivie d'une filtration tangentielle, permet de disposer d'un procédé apte à traiter en parallèle concentrat et filtrat et à fonctionner, au moins au niveau du concentrat, en circuit fermé de manière à limiter les opérations de maintenance et de vidange des cuves dans lesquelles lesdits effluents peuvent être stockés.

L'invention a encore pour objet une station de traitement en particulier d'épuration, d'effluents, notamment urbains, industriels ou animaliers, pour la mise en oeuvre du procédé du type précité, du type comprenant au moins une cuve de traitement biologique, généralement bactérien, la cuve de traitement biologique étant associée à une cuve d'électro-floculation en vue de la formation dans l'effluent de composés coagulés caractérisée en ce que la cuve d'électro-floculation alimente une unité de filtration tangentielle présentant au moins deux sorties d'évacuation, l'une du concentrat, raccordée à la cuve de traitement biologique pour soumettre à nouveau le concentrat à un traitement biologique, l'autre du filtrat servant à l'évacuation du filtrat épuré, lesdites sorties étant alimentées en parallèle l'une en concentrat, l'autre en filtrat par l'intermédiaire d'une même pompe.

L'invention a encore pour objet une installation sanitaire telle que douche, toilette, du type comprenant au moins une conduite d'alimentation en eau et une conduite d'évacuation des eaux, caractérisée en ce que lesdites conduites sont raccordées à une station de traitement des effluents du type précité.

L'invention sera bien comprise à la lecture de la description suivante d'exemples de réalisation, en référence aux dessins annexés dans lesquels :
la figure 1 représente une vue schématique en coupe d'une installation sanitaire équipée d'une station de traitement conforme à l'invention;
la figure 2 représente une vue en perspective d'une station de traitement conforme à l'invention ;
la figure 3 représente une vue en perspective d'une station de traitement conforme à l'invention vue côté filtre à particules ;
la figure 4 représente une vue en coupe d'une station de traitement conforme à l'invention, vue côté unité de filtration et
la figure 5 représente une vue de dessus de la station de la figure 4.

Comme mentionné ci-dessus, le procédé de traitement, en particulier d'épuration, d'effluents, objet de l'invention, comprend au moins une étape de traitement biologique, généralement bactérien, dudit effluent suivie d'une électro-floculation en vue de la formation de composés coagulés dans ledit effluent, cette étape d'électro-floculation étant elle-même suivie d'une étape de filtration tangentielle pour séparer le concentrat du filtrat. L'étape de traitement biologique, généralement bactérien dudit effluent, peut être opérée à l'aide d'un complexe bactérien comprenant au moins un bacillus et au moins un lactobacillus. Ce complexe bactérien utilise, comme source d'azote, de l'azote minéral, sous forme d'ammoniaque, de nitrates ou de nitrites, ou de l'azote organique, sous forme d'urée, d'urates, d'amino-acides, de bases azotées ou de tout autre composé azoté. Ce complexe bactérien est apte à transformer l'azote minéral en azote organique sous forme de protéines bactériennes. Ce complexe bactérien permet donc la digestion, la décomposition et la transformation de résidus d'origine biologique sous forme de biomasse et de composés organiques stables et non polluants. Un tel complexe est donc applicable au traitement de déchets d'origine biologique, tels que déjections (litières de porcs, de ruminants, d'équidés ou de volailles ou lisiers, déjections humaines) ou purins, cadavres, eaux stagnantes et leur transformation en compost ou autres composés azotés stables, biodégradables et non polluants. Cette étape de traitement bactérien s'effectue sans dégagement d'odeur nauséabonde. A l'inverse, les odeurs des effluents à traiter sont absorbées.

Un complexe bactérien apte à être mise en oeuvre lors de l'étape de traitement biologique dans le cadre du présent procédé est notamment décrit dans le brevet FR-A-2.729.156.

Ce traitement bactérien permet donc de réduire la masse des résidus d'origine biologique et d'en réduire les nuisances olfactives.

Ce complexe biologique peut se présenter sous forme d'une composition sèche directement introduite dans la station de traitement.

Cette étape de traitement biologique est suivie d'une étape d'électro-floculation. L'électro-floculation, encore appelée électrocoagulation, est un procédé d'électrolyse à électrode soluble qui met en solution un cation métallique, tel que Al³⁺, Fe³⁺, provoquant ainsi la coagulation des colloïdes. L'électrolyse a également une action sur les composés solubles oxydables ou réductibles contenus dans l'effluent. En effet, il est connu qu'il n'est pas possible de décanter naturellement les suspensions colloïdales contenant des particules ayant une taille comprise entre 10 µm et 1 mm, ces suspensions étant soumises d'une part aux forces d'attraction de Van der Waals, d'autre part aux forces de répulsion électrostatiques entre particules, la plupart du temps chargées négativement. Pour déstabiliser une telle suspension colloïdale, il convient de neutraliser cette charge négative par ajout d'ions positifs. La coagulation ou floculation consiste donc en la déstabilisation de la suspension par décharge des édifices colloïdaux au moyen d'un réactif chimique appelé coagulant apportant des charges positives de sens opposé à celui des particules colloïdales négatives. Les conditions de coagulation et en particulier le pH de coagulation peuvent être ajustés par ajout de base ou d'acide.

A l'issue de cette étape d'électro-floculation qui amène à la formation de composés coagulés dans ledit effluent, on soumet l'effluent à une filtration tangentielle pour séparer le concentrat du filtrat, de telle sorte qu'à l'issue de l'étape de filtration, on soumet à nouveau le concentrat à un traitement biologique tandis qu'on évacue le filtrat épuré. On peut ainsi travailler en circuit fermé au niveau des particules solides. En parallèle, on peut récupérer le filtrat en vue par exemple de le réutiliser dans une installation sanitaire dont l'effluent traité est issu.

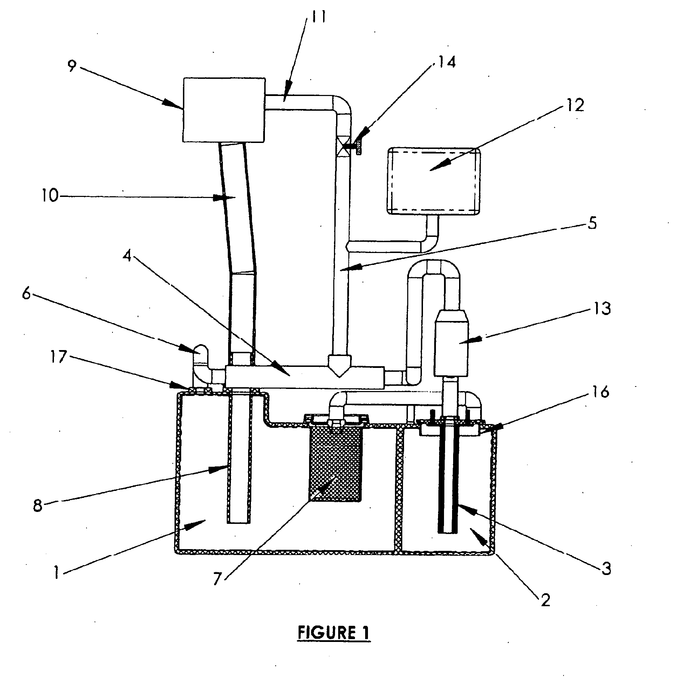

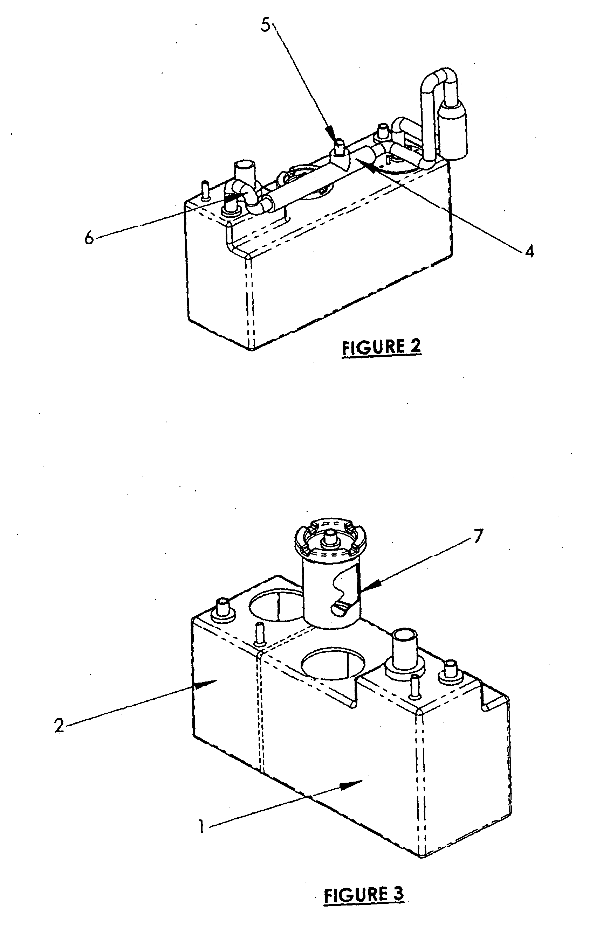

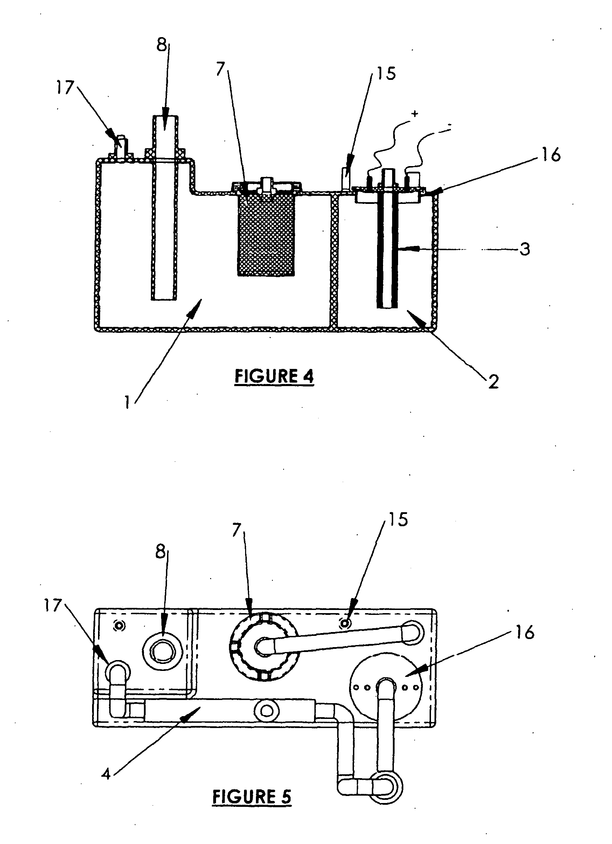

Pour la mise en oeuvre d'un tel procédé, une station de traitement conforme à celle représentée aux figures 1 à 5 peut être utilisée. Cette station de traitement comprend au moins une cuve 1 de traitement biologique, généralement bactérien, associée à une cuve d'électro-floculation en vue de la formation dans l'effluent dont le contenu a été traité par les bactéries de composés coagulés. Cette cuve 2 d'électro-floculation alimente une unité 4 de filtration présentant au moins deux sorties 5, 6, l'une 6 d'évacuation du concentrat raccordée à la cuve 1 de traitement biologique pour soumettre à nouveau le concentrat à un traitement biologique, l'autre 5 servant à l'évacuation du filtrat épuré. La cuve 1 de traitement biologique est alimentée en bactéries qui se présentent sous forme d'une composition sèche parallèlement à l'alimentation en effluent. A cet effet, cette cuve 1 de filtration de traitement biologique est munie d'une entrée 8 d'alimentation en effluent à traiter et d'alimentation en bactéries. Cette cuve est également équipée d'une entrée 17 dont le rôle sera décrit ci-après. Une fois soumis à un traitement biologique, l'effluent est amené dans la cuve 2 d'électro-floculation. Il est prévu, dans la zone de communication entre la cuve 1 de traitement biologique et la cuve 2 d'électro-floculation, un filtre 7 à particules. Ce filtre est destiné à retenir, à l'intérieur de la cuve 1 de traitement biologique, les particules de dimension supérieure à 1 micron. Ce filtre 7 à particules est monté de manière amovible dans ladite zone de communication pour pouvoir être aisément lavé ou changé. Ce filtre à particules est un filtre en céramique ou en pouzzolane bien connu à ceux versés dans cet art. La présence de ce filtre à particules empêche un colmatage dans les zones aval de ladite station de traitement. Généralement, la communication entre la cuve 1 de traitement biologique et la cuve 2 d'électro-floculation s'effectue par trop plein, l'effluent contenu dans la cuve 1 de traitement biologique parvenant par débordement dans la cuve 2 d'électro-floculation. Tout autre mode de circulation de l'effluent entre lesdites cuves peut également être envisagé.

Cette cuve 2 d'électro-floculation comporte au moins deux électrodes 3, de préférence planes verticales, formant l'une, une anode soluble et l'autre, une cathode. Ces deux électrodes sont montées sur un bouchon apte à être vissé ou dévissé d'une ouverture ménagée dans ladite cuve 2 d'électro-floculation. A nouveau, il en résulte la possibilité de procéder aisément au changement desdites électrodes lorsqu'elles sont usées. Les anodes, qui sont des électrodes consommables, sont en usage courant remplacées tous les deux ou trois mois. La disposition des électrodes facilite également le regroupement du floc à la partie supérieure de ladite cuve sous l'effet des bulles de gaz, tel qu'oxygène et hydrogène, dégagées par les électrodes. L'une des configurations les plus courantes comporte une anode centrale, entourée de deux cathodes, situées à 10 cm environ des parois de la cuve. Les bulles d'hydrogène dégagées sur ces cathodes contribuent à l'agitation de l'effluent à épurer. Pour accroître cette agitation et éviter ainsi l'accumulation de dépôt sur les parois de la cuve, on peut injecter de l'air dans le courant d'effluent qui traverse la cuve 2 d'électro-floculation. La cuve 2 d'électro-floculation et la cuve 1 de traitement biologique peuvent être réalisées d'une seule pièce par exemple par rotomoulage.

En sortie, la cuve 2 d'électro-floculation communique avec une unité 4 de filtration. Cette unité 4 de filtration présente au moins deux sorties 5, 6 d'évacuation, l'une 6 du concentrat, raccordée à la cuve 1 de traitement biologique pour soumettre à nouveau le concentrat à un traitement biologique, l'autre 5 du filtrat servant à l'évacuation du filtrat épuré, lesdites sorties étant alimentées en parallèle l'une en concentrat, l'autre en filtrat par l'intermédiaire d'une même pompe 13. Cette disposition permet un traitement sans à-coups du concentrat puisqu'il est traité en parallèle du filtrat en fonction des besoins. Il en résulte une efficacité accrue du traitement par rapport à l'état de la technique où, soit on attend une accumulation du concentrat avant de traiter, soit, on ne le traite pas et on le stocke dans un récipient supplémentaire. De ces deux caractéristiques, il en résulte une installation moins encombrante et moins onéreuse puisqu'une seule pompe suffit là où deux sont nécessaires dans l'état de la technique associée à une maintenance moins lourde du fait du traitement systématique du concentrat en parallèle du filtrat. De préférence, la pompe 13 alimentant en parallèle les sorties 5, 6 d'évacuation de l'unité 4 de filtration est disposée entre la cuve 2 d'électro-floculation et l'unité 4 de filtration tangentielle. Cette unité 4 de filtration tangentielle est généralement formée d'une enveloppe tubulaire munie d'au moins deux ouvertures, l'une, axiale, formant la sortie 6 d'évacuation du concentrat, l'autre, radiale, formant la sortie 5 d'évacuation du filtrat, ladite enveloppe logeant une batterie de canaux parallèles à l'intérieur desquels circule le concentrat tandis que le filtrat est évacué à travers les parois desdits canaux. De telles cartouches de filtration tangentielle sont à nouveau bien connues à ceux versés dans cet art. Généralement, les canaux contiennent un matériau de filtration dont les caractéristiques sont fonctions des caractéristiques du concentrat à filtrer. Les canaux sont donc reliés en sortie par l'intermédiaire de la sortie 6 axiale à l'entrée 17 de la cuve 1 de traitement biologique pour réinjecter le concentrat à l'intérieur de ladite cuve et le soumettre à un nouveau traitement biologique. Le filtrat est quant à lui évacué de l'unité 4 de filtration par la sortie 5 radiale. Dans le cas où la station de traitement est associée à une installation sanitaire de type toilette, comme cela est représenté dans les figures, la cuve 1 de traitement biologique comporte son entrée 17 d'effluents raccordée à la conduite 10 d'évacuation des eaux d'une installation 9 sanitaire, telle que toilette ou douche, tandis que l'une 5 des sorties 5, 6 de l'unité 4 de filtration est raccordée à la conduite 11 d'alimentation en eau de ladite installation 9 sanitaire pour un traitement en circuit fermé dudit effluent. On réutilise ainsi le filtrat pour l'alimentation de l'installation sanitaire dont on vient de traiter l'effluent.

Il est également prévu, sur le circuit d'alimentation en eau de l'installation 9 sanitaire, une réserve 12 d'eau, de type ballon, susceptible d'être évacuée en direction de l'unité 4 de filtration pour le décolmatage de ladite unité.

Enfin, la pompe 13 de circulation forcée dudit effluent, est asservie en fonctionnement au fonctionnement de l'installation 9 sanitaire à laquelle la station de traitement est raccordée. Dans les exemples représentés, la mise en marche et l'arrêt de la pompe 13 de circulation de fluide sont asservis au tirage de la chasse d'eau de l'installation sanitaire. Il doit être noté que le tirage de la chasse d'eau provoque une dépression dans le circuit. Cette dépression qui peut être détectée, peut déclencher d'une part le fonctionnement de la pompe 13, d'autre part l'alimentation des électrodes de la cuve 2 d'électro-floculation.

Bien évidemment, l'installation comporte, de manière en soi connue, des organes de commande de type flotteur, des capteurs anti-retour, des pressostats... qui permettent de réguler les différents cycles du traitement.

La station est commandée par un automatisme basse tension autonome sur pile et batterie qui permet un cycle de traitement en continu dans le cas d'une installation de traitement embarquée.

Au démarrage de la station, il faut remplir la cuve 1 de traitement biologique à l'aide de l'installation sanitaire, par exemple en tirant la chasse d'eau dans le cas d'une toilette, et compléter l'eau amenée par le retour d'eau de la cuve 2 d'électro-floculation. Un clapet anti-retour de sécurité permet d'éviter tout débordement des contenus desdites cuves. Le niveau d'eau permet la mise en service de la station de traitement.

Les micro-organismes sont amenés dans la cuve 1 de traitement biologique à nouveau à l'aide de l'installation sanitaire. Il suffit en effet de disposer les micro-organismes dans la cuvette des toilettes puis de tirer la chasse d'eau pour entraîner les micro-organismes jusque dans la cuve 1 de traitement biologique. Cette opération pourra être répétée plusieurs fois. Une fois ces opérations effectuées, la station est prête à fonctionner. Bien évidemment, un rechargement en micro-organismes sera opéré régulièrement par l'utilisateur en fonction de la durée de fonctionnement de l'installation. De la même manière, le filtre à particules devra être lavé et vérifié régulièrement pour éviter un colmatage de ce dernier. En ce qui concerne la cuve 2 d'électro-floculation, il conviendra également de vérifier régulièrement l'usure des électrodes et de les changer lorsque cela est nécessaire. Généralement, cela représente plus de 1 000 heures d'utilisation. De la même manière, la cartouche de filtration tangentielle devra être changée régulièrement. En cas de non utilisation d'une telle station, il conviendra de vidanger l'ensemble des cuves de l'installation.

Pour parfaire ladite station, il est prévu, au niveau de la cuve 1 de traitement biologique, un évent permettant l'évacuation des gaz contenus dans la cuve 1 de traitement biologique. De même, l'entrée en effluent dans la cuve 1, représentée en 8 et 17 aux figures, est couplée avec un système venturi pour permettre, parallèlement au transfert de l'effluent de l'installation sanitaire vers la cuve, un apport en oxygène facilitant la croissance et le maintien en vie desdites bactéries.

Bien que la station de traitement ait ici été représentée associée à une installation sanitaire de type toilette, toute autre application de la station de traitement peut être envisagée.

Dans le cas d'une application à une toilette embarquée, par exemple sur un bateau, si l'on suppose que le nombre d'usagers sur ledit bateau est égal à 4, que le nombre d'utilisations de la chasse d'eau est de 8 fois par jour, que le volume d'eau de la chasse d'eau est de 2,5 litre par tirage, soit 20 litres par jour, et que le volume de matières solubles et solides produites par jour est de 1,2 kg, on aboutit à un volume total d'effluent à traiter de 21,2 litres par jour.

A l'intérieur des cuves, il est stocké un volume d'eau correspondant au volume des matières solides sur 5 jours, soit environ 6 litres. La cuve 1 de traitement biologique présente généralement une contenance maximale voisine de 40 litres tandis que la cuve 2 d'électro-floculation est apte à contenir environ 16 litres de fluide.

L'énergie nécessaire au fonctionnement d'une telle station de traitement correspond à celle nécessaire au fonctionnement des électrodes et de la pompe de circulation auto-amorçante. Il en résulte une faible consommation en énergie de ladite station qui peut fonctionner sur batterie.

Une telle station de traitement a ici été décrite dans le cas d'une application à un circuit fermé. Il est bien évident que cette station de traitement peut être utilisée dans le cas d'un circuit ouvert, les filtrats étant dans ce cas récupérés et par exemple rejetés dans la nature sans provoquer de nuisance de l'environnement.

## Revendications

1. Procédé de traitement, en particulier d'épuration, d'effluents, notamment urbains, industriels ou animaliers, du type comprenant au moins les étapes successives suivantes :
• une étape de traitement biologique, généralement bactérien, dudit effluent,
• une étape d'électro-floculation de l'effluent, en vue de la formation de composés coagulés dans ledit effluent,
• une étape de filtration de l'effluent pour séparer le concentrat du filtrat,
**caractérisé, en ce que**, lors de l'étape de filtration, on soumet l'effluent à une filtration tangentielle et **en ce que**, à l'issue de l'étape de filtration, par l'intermédiaire d'une même pompe, on soumet à nouveau le concentrat à un traitement biologique tandis qu'on évacue le filtrat épuré.

2. Station de traitement, en particulier d'épuration, d'effluents, notamment urbains, industriels ou animaliers, notamment pour la mise en oeuvre du procédé conforme à la revendication 1, du type comprenant au moins une cuve (1) de traitement biologique, généralement bactérien, la cuve (1) de traitement biologique étant associée à une cuve (2) d'électro-floculation en vue de la formation dans l'effluent de composés coagulés,
**caractérisé en ce que** la cuve (2) d'électro-floculation alimente une unité (4) de filtration tangentielle présentant au moins deux sorties (5, 6) d'évacuation, l'une (6) du concentrat, raccordée à la cuve (1) de traitement biologique pour soumettre à nouveau le concentrat à un traitement biologique, l'autre (5) du filtrat servant à l'évacuation du filtrat épuré, lesdites sorties étant alimentées en parallèle l'une en concentrat, l'autre en filtrat par l'intermédiaire d'une même pompe (13).

3. Station de traitement selon la revendication 2,
**caractérisée en ce qu'**il est prévu, dans la zone de communication entre la cuve (1) de traitement biologique et la cuve (2) d'électro-floculation, un filtre (7) à particules.

4. Station de traitement selon la revendication 2,
**caractérisé en ce que** la pompe (13) alimentant en parallèle les sorties (5, 6) d'évacuation de l'unité (4) de filtration est disposée entre la cuve (2) d'électrofloculation et l'unité (4) de filtration tangentielle.

5. Station de traitement selon l'une des revendications 3 et 4,
**caractérisée en ce que** l'unité (4) de filtration tangentielle est formée d'une enveloppe tubulaire munie d'au moins deux ouvertures, l'une, axiale , formant la sortie (6) d'évacuation du concentrat, l'autre, radiale, formant la sortie (5) d'évacuation du filtrat, ladite enveloppe logeant une batterie de canaux parallèles à l'intérieur desquels circule le concentrat tandis que le filtrat est évacué à travers les parois desdits canaux.

6. Station de traitement selon l'une des revendications 2 à 5,
**caractérisée en ce que** la cuve (1) de traitement biologique comporte une entrée (17) d'effluents raccordée à la conduite (10) d'évacuation des eaux d'une installation (9) sanitaire, telle que toilette, douche, et **en ce que** l'unité (4) de filtration comporte une sortie (5) raccordée à la conduite (11) d'alimentation en eau de ladite installation (9) sanitaire pour un traitement en circuit fermé dudit effluent.

7. Station de traitement selon la revendication 6,
**caractérisée en ce qu'**il est prévu, sur le circuit d'alimentation en eau de l'installation (9) sanitaire, une réserve (12) d'eau susceptible d'être évacuée en direction de l'unité (4) de filtration pour le décolmatage de ladite unité.

8. Station de traitement selon l'une des revendications 6 et 7,
**caractérisée en ce que** la pompe (13) de circulation forcée dudit effluent, est asservie en fonctionnement au fonctionnement de l'installation (9) sanitaire à laquelle la station de traitement est raccordée.

9. Station de traitement selon l'une des revendications 3 à 8,
**caractérisée en ce que** la cuve (2) d'électro-floculation comporte au moins deux électrodes (3) formant l'une, une anode soluble et l'autre, une cathode.

10. Installation (9) sanitaire telle que douche, toilette, du type comprenant au moins une conduite (11) d'alimentation en eau et une conduite (10) d'évacuation des eaux,
**caractérisée en ce que** lesdites conduites (10, 11) sont raccordées à une station de traitement des effluents conforme à l'une des revendications 2 à 9.

## Claims

1. Method of treating, in particular purifying, effluents, especially urban, industrial or animal effluents, of the type comprising at least the following successive stages:
• a stage for the biological, generally bacterial, treatment of the said effluent,
• a stage for the electro-flocculation of the effluent, with a view to the forming of coagulated compounds within the said effluent, and
• a stage for the filtration of the effluent in order to separate the concentrate from the filtrate,
**characterised in that** the effluent is subjected to tangential filtration during the filtration stage and **in that** the concentrate is subjected to a biological treatment again at the end of the filtration stage via the same pump, while the purified filtrate is evacuated.

2. Station for treating, in particular purifying, effluents, especially urban, industrial or animal effluents, especially for the implementation of the method in accordance with claim 1, of the type comprising at least one tank (1) for biological, generally bacterial, treatment, the biological-treatment tank (1) being associated with a tank (2) for electro-flocculation with a view to the forming of coagulated compounds within the effluent,
**characterised in that** the electro-flocculation tank (2) supplies a tangential-filtration unit (4) having at least two evacuating outlets (5, 6), the one (6) for the concentrate being connected to the biological-treatment tank (1) in order to subject the concentrate to a biological treatment again, and the other (5) for the filtrate serving to evacuate the purified filtrate, the said outlets being fed in parallel, one with concentrate, the other with filtrate, via the same pump (13).

3. Treatment station according to claim 2,
**characterised in that** a particle filter (7) is provided in the zone of communication between the biological treatment tank (1) and the electro-flocculation tank (2).

4. Treatment station according to claim 2,
**characterised in that** the pump (13) which supplies the evacuating outlets (5, 6) of the filtration unit (4) in parallel is arranged between the electro-flocculation tank (2) and the tangential-filtration unit (4).

5. Treatment station according to either of claims 3 or 4,
**characterised in that** the tangential-filtration unit (4) is made up of a tubular envelope equipped with at least two apertures, one aperture, which is axial, forming the outlet (6) for evacuating the concentrate, and the other aperture, which is radial, forming the outlet (5) for evacuating the filtrate, the said envelope housing a set of parallel channels inside which the concentrate circulates while the filtrate is evacuated through the walls of the said channels.

6. Treatment station according to one of claims 2 to 5,
**characterised in that** the biological treatment tank (1) comprises an inlet (17) for effluents which is connected to the conduit (10) for evacuating the waters from a sanitary installation (9), such as a toilet or shower, and **in that** the filtration unit (4) comprises an outlet (5) which is connected to the conduit (11) for supplying the said sanitary installation (9) with water, for treatment of the said effluent in a closed circuit.

7. Treatment station according to claim 6,
**characterised in that** a reserve (12) of water, which is capable of being evacuated in the direction of the filtration unit (4) for the purpose of unclogging the said unit, is provided on the circuit for supplying the sanitary installation (9) with water.

8. Treatment station according to either of claims 6 or 7,
**characterised in that** the pump (13) for the forced circulation of the said effluent is subjugated in operation to the operation of the sanitary installation (9) to which the treatment station is connected.

9. Treatment station according to one of claims 3 to 8,
**characterised in that** the electro-flocculation tank (2) comprises at least two electrodes (3), one forming a soluble anode, and the other a cathode.

10. Sanitary installation (9) such as a shower or toilet, of the type comprising at least one conduit (11) for supplying water and one conduit (10) for evacuating the waters,
**characterised in that** the said conduits (10, 11) are connected to a station for treating effluents in accordance with one of claims 2 to 9.

## Patentansprüche

1. Verfahren zur Aufbereitung, insbesondere Reinigung, von insbesondere kommunalen, industriellen oder tierischen Abwässern, das mindestens die folgenden aufeinanderfolgenden Phasen umfasst:
• eine Phase der biologischen, im Allgemeinen bakteriellen, Aufbereitung des Abwassers,
• eine Phase der Elektroflockulation des Abwassers zur Bildung koagulierter Verbindungen in dem Abwasser,
• eine Phase der Filtrierung des Abwassers zur Trennung des Konzentrates von dem Filtrat,
**dadurch gekennzeichnet, dass** das Abwasser in der Filtrierungsphase einer tangentialen Filtrierung unterzogen wird und dass das Konzentrat im Anschluss an die Filtrierungsphase über die gleiche Pumpe erneut einer biologischen Aufbereitung unterzogen wird, während das geklärte Filtrat abgeleitet wird.

2. Station zur Aufbereitung, insbesondere Reinigung, von insbesondere kommunalen, industriellen oder tierischen Abwässern, insbesondere zur Durchführung des Verfahrens nach Anspruch 1, die mindestens einen Behälter (1) zur biologischen, im Allgemeinen bakteriellen, Aufbereitung umfasst, wobei der Behälter (1) für die biologische Aufbereitung einem Behälter (2) für die Elektroflockulation zur Bildung koagulierter Verbindungen in dem Abwasser zugeordnet ist, **dadurch gekennzeichnet, dass** der Behälter (2) für die Elektroflockulation eine Einheit (4) zur tangentialen Filtrierung speist, die mindestens zwei Abläufe (5, 6) umfasst, einen (6) für das Konzentrat, der an den Behälter (1) für die biologische Aufbereitung angeschlossen ist, um das Konzentrat erneut einer biologischen Aufbereitung zu unterziehen, und den anderen (5) für das Filtrat, der zur Ableitung des gereinigten Filtrates dient, wobei die Abläufe über die gleiche Pumpe (13) parallel mit Konzentrat beziehungsweise Filtrat gespeist werden.

3. Aufbereitungsstation nach Anspruch 2, **dadurch gekennzeichnet, dass** in dem Verbindungsbereich zwischen dem Behälter (1) für die biologische Aufbereitung und dem Behälter (2) für die Elektroflockulation ein Partikelfilter (7) vorgesehen ist.

4. Aufbereitungsstation nach Anspruch 2, **dadurch gekennzeichnet, dass** die Pumpe (13), die die Abläufe (5, 6) der Filtriereinheit (4) parallel speist, zwischen dem Behälter (2) für die Elektroflockulation und der Einheit (4) zur tangentialen Filtrierung angeordnet ist.

5. Aufbereitungsstation nach einem der Ansprüche 3 und 4, **dadurch gekennzeichnet, dass** die Einheit (4) zur tangentialen Filtrierung von einem Mantelrohr mit mindestens zwei Öffnungen gebildet ist, einer axialen Öffnung, die den Ablauf (6) für das Konzentrat bildet, und einer anderen, radialen Öffnung, die den Ablauf (5) für das Filtrat bildet, wobei das Rohr eine Gruppe parallel angeordneter Leitungen aufnimmt, in denen das Konzentrat umläuft, während das Filtrat durch die Wände der Leitungen abgeleitet wird.

6. Aufbereitungsstation nach einem der Ansprüche 2 bis 5, **dadurch gekennzeichnet, dass** der Behälter (1) für die biologische Aufbereitung einen Abwasserzulauf (17) umfasst, der an das Wasserabflussrohr (10) einer Sanitäranlage (9), beispielsweise einer Toilette oder Dusche, angeschlossen ist und dass die Filtriereinheit (4) einen Ablauf (5) umfasst, der für eine Aufbereitung des Abwassers in einem geschlossenen Kreislauf an das Wasserzulaufrohr (11) der Sanitäranlage (9) angeschlossen ist.

7. Aufbereitungsstation nach Anspruch 6, **dadurch gekennzeichnet, dass** in dem Wasserversorgungskreislauf der Sanitäranlage (9) ein Wasserspeicher (12) vorgesehen ist, der in Richtung der Filtriereinheit (4) zur Reinigung der Einheit entleerbar ist.

8. Aufbereitungsstation nach einem der Ansprüche 6 und 7, **dadurch gekennzeichnet, dass** die Pumpe (13) für die Zwangsumwälzung des Abwassers entsprechend der Wirkungsweise der Sanitäranlage (9), an die die Aufbereitungsstation angeschlossen ist, angesteuert wird.

9. Aufbereitungsstation nach einem der Ansprüche 3 bis 8, **dadurch gekennzeichnet, dass** der Behälter (2) für die Elektroflockulation mindestens zwei Elektroden (3) umfasst, wobei die eine eine lösliche Anode und die andere eine Kathode bildet.

10. Sanitäranlage (9) wie eine Dusche oder Toilette, die mindestens ein Wasserzulaufrohr (11) und ein Wasserabflussrohr (10) umfasst, **dadurch gekennzeichnet, dass** die Rohre (10, 11) an eine Station zur Abwasseraufbereitung nach einem der Ansprüche 2 bis 9 angeschlossen sind.
